# EUROPEAN PATENT SPECIFICATION

(11) **EP 3 536 277 B1**
(45) Date of publication and mention of the grant of the patent: **19.05.2021**
(21) Application number: 18382153.7
(22) Date of filing: 09.03.2018
(51) Int. Cl.: A61C 9/00, A61C 19/05, A61C 19/04

(54) **METHOD AND SYSTEM OF DENTAL OCCLUSION MEASUREMENT AND VIRTUAL DEPLOYMENT**
VERFAHREN UND SYSTEM ZUR ZAHNÄRZTLICHEN OKKLUSIONSMESSUNG UND VIRTUELLEN ENTFALTUNG
PROCÉDÉ ET SYSTÈME DE MESURE D'OCCLUSION DENTAIRE ET DE DÉPLOIEMENT VIRTUEL

(43) Date of publication of application: 11.09.2019
(73) Proprietor: Universidad del Pais Vasco - Euskal Herriko Unibertsitatea (UPV/EHU), 48940 Leioa (ES)
(72) Inventor: SOLABERRIETA MENDEZ, Eneko, 48940 LEIOA (ES)
(74) Representative: Balder IP Law, S.L.

(56) References cited:
- CN-A- 107 348 965
- US-A1- 2002 094 509
- US-A1- 2016 338 812

## Description

### FIELD OF THE INVENTION

The present invention has its application within the sector of dental instruments, and especially, in the industrial area engaged in providing tools for retrieving dental occlusion information.

### BACKGROUND OF THE INVENTION

There is an increasing trend in the dental sector of diagnosis, planning and treatment based on the analysis of virtual representations of the patient's denture. In particular, the digitalization of occlusal contact information has focused a significant amount of attention in recent years, given the relevance of this information in diverse areas as prosthetics, esthetics, ferules, occlusal analysis and adjustment, temporal-mandible disorders and temporal-mandible articulations, to name a few.

Occlusal analysis is traditionally based on papers impregnated with waxes or oleaginous substance, which transfer its color to the regions where pressure from the teeth is applied. These papers, however, present a typical thickness between 40 and 200 microns which may result excessive for a detailed analysis in some cases. Alternatively, synthetic foils have been developed, which reduce the aforementioned thickness down to a range between 8 and 20 microns. In other approaches, such as shimstock papers, with a typical thickness of 8 microns, instead of transferring a colored substance to the teeth, the paper itself is adhered in those regions where contact between the upper and lower teeth takes place. In more complex solutions, a photo-plastic film is applied to the occlusal surface, before a sustained occlusion for a typical lapse between 10 and 20 seconds. Afterwards, the photo-plastic film is removed, and light is applied for occlusion analysis. Note that all these solutions only offer static information, that is, no time-resolved data of the occlusal process is provided.

Solutions based on pressure-sensitive plates are also known in the state of the art. Both the location and intensity of the occlusal contacts is determined, the later showing a linear response between applied charges and resulting measurements. However, the sensing plates used in this solution are typically too thick, resulting in heavier contacts in the posterior teeth than in the frontal ones. Furthermore, as in previous cases, contacts are only measured statically, with no information on temporal variations.

More recent solutions solve this limitation by providing time-resolved measurements, which are automatically digitalized by a force sensor, enabling subsequent analysis of both the position and the synchronization of the occlusal contacts. For example, US 4,856,993 and EP 0,216,899 B1 disclose grid-based sensors with time-resolved measurement of occlusal contacts. However, despite the advantages of direct digitalization and time-resolved measurement, these systems lack the precision of analogic solution. A single sensing element of the grid presents a typical size of 1 mm², significantly limiting the number and accuracy of the detected contacts. Furthermore, the pressure amount of each occlusal contact is only detected in relative terms, and not as an absolute value.

However, the most limiting aspect of digital force sensors is that the occlusal contact information is provided in a bidimensional representation, without references to associate the contact location to the user's actual denture, hence relying on the dentist personal ability to perform said association. That is, no alignment is provided between the occlusal contacts and the arcades of the patient's denture. More recent versions of these tools provide three-dimensional digital casts of the user's denture, enabling to manually overlap the 2D occlusal contact information with the 3D digital cast. However, being a manual operation implies a lack of objective references that result in a variable accuracy depending on the expertise of the user.

In other examples, additional alternative approaches are disclosed by US 2012/0092679 A1, where occlusal analysis is performed by measuring light transmission through a layer of a polysiloxane; and US 2017/0265978 A1, which relies on capacitive sensors. Document US 2002/094509 describes systems and methods for integrating bite registration data with a digital model of an upper jaw and a lower jaw. However, regardless of the particular technology for detecting the position and temporal evolution of the occlusal contacts, all these systems still fail to link the occlusion information to the actual topology of the user's denture. Therefore, there is still the need in the state of the art of a method and system which provide precise characterization of dental occlusion, while enabling referencing the occlusal contacts to the actual denture of the user.

### SUMMARY OF THE INVENTION

The invention is as defined in the appended claims. The current invention solves all the aforementioned problems by disclosing a system and method which capture information for virtual deployment of occlusal contacts, correlating data from a force sensor and a three-dimensional (3D) color scanner in order to project the occlusal contacts onto a digital cast of the user's denture.

In a first aspect of the present invention, a system of dental occlusion measurement and virtual deployment is disclosed. The system comprises:
- A force sensor which registers a plurality of occlusal contacts of a user's denture. The force sensor further comprises marking means which adhere a plurality of visual markers to the user's denture in the positions of the occlusal contacts, when said occlusal contacts are being registered. The visual markers are preferably generated by a tinted paper, although other alternative techniques for marking occlusal contacts known in the state of the art may be applied.
- A 3D scanner which scans the maxillary and mandibular arcades of the user's denture, generating a first maxillary digital cast and a first mandibular digital cast. The 3D scanner is color-sensitive, hence enabling the first maxillary and mandibular digital casts to capture the location of the adhered visual markers. According to preferred embodiments of the invention, the 3D scanner may either be an intra-oral 3D scanner or an extra-oral 3D scanner.
- Data processing means which correlate the visual markers in the first maxillary and mandibular digital casts and the registered occlusal contacts, hence computing positioning information which determines which data captured by the force sensor and the 3D scanner refer to a same position. According to preferred embodiments of the invention, the correlation between the visual markers in the first maxillary and mandibular digital casts and the registered occlusal contacts may be performed through an automated algorithm which preferably further comprises a manual pre-alignment stage based on positioning input received from a user through a visual interface. In the case of manual pre-alignment, at least three points of maximum occlusion within the registered occlusal contacts are preferably associated with at least three visual markers in the first maxillary and mandibular digital casts. Manual pre-alignment greatly facilitates any ulterior automated correlation performed by the system.

After computing the aforementioned positioning information, the data processing means generate a second maxillary and mandibular digital casts of the user's denture by projecting the occlusal contacts and forces onto the first maxillary and mandibular digital casts according to the computed positioning information.

In a second aspect of the present invention, a method of dental occlusion measurement and virtual deployment is disclosed. The method comprises:
i. Registering a plurality of occlusal contacts by means of a force sensor which is further adapted to adhere a plurality of visual markers to a user's denture in the positions of said occlusal contacts.
ii. Scanning the maxillary arcade and the mandibular arcade of the user's denture, generating a first maxillary and mandibular digital casts of the user's denture with the adhered visual markers. Preferably, this step may either comprise scanning the maxillary and mandibular arcades of the user's denture to generate the first maxillary and mandibular digital casts with either an intra-oral scanner or an extra-oral scanner. Also preferably, this step comprises detecting a plurality of visual markers generated by a tinted paper of the force sensor, although alternative visual markers known in the state of the art may be applied.
iii. Computing a positioning information by correlating the visual markers in the first digital cast and the registered occlusal contacts. This step is preferably performed through an automated algorithm, which may further comprise a manual pre-alignment stage based on positioning input received by the user. That is, in the case of manual pre-alignment, at least three points of maximum occlusion within the registered occlusal contacts are preferably associated with at least three visual markers in the first maxillary and mandibular digital casts.
iv. Generating second maxillary and mandibular digital casts of the user's denture by projecting the occlusal contacts onto the first maxillary and mandibular digital casts according to the computed positioning information over time.

In a third aspect of the present invention, a computer program is disclosed which implements the method of the invention. The computer program comprises computer program code means adapted to perform any embodiment of the method of the invention on any embodiment of the system of the invention when run on a computer, a digital signal processor, a field-programmable gate array, an application-specific integrated circuit, a micro-processor, a micro-controller, or any other form of programmable hardware.

The system, method and computer program of the invention provide efficient and accurate projection over time of occlusal contact information onto a personalized digital cast of the user. This projection enables a more precise analysis of the occlusal contact information, as well as observation of the time evolution of said occlusal contacts. Additional advantages and features of the invention will become apparent from the detailed description that follows and will be particularly pointed out in the appended claims.

### BRIEF DESCRIPTION OF THE DRAWINGS

For the purpose of aiding the understanding of the characteristics of the invention, according to a preferred practical embodiment thereof and in order to complement this description, the following figures are attached as an integral part thereof, having an illustrative and non-limiting character:
Figure 1 shows the main elements of the system of the invention, according to a particular embodiment thereof.
Figure 2 presents the main step of the method of the invention, according to a particular embodiment thereof.
Figure 3 illustrates the step of registering the occlusal contacts with a force sensor, according to particular embodiments thereof.
Figure 4 exemplifies a visual representation of the registered occlusal contacts, according to particular embodiments of the method and system of the invention.
Figure 5 exemplifies the adhesion to the user's denture of visual markers generated by a tinted paper, according to particular embodiments of the method and system of the invention.
Figure 6 illustrates the step of scanning the maxillary and mandibular arcades of the user's denture to generate the first maxillary and mandibular digital casts of the user's denture with an 3D scanner, according to particular embodiments thereof.
Figure 7 presents an example of the first maxillary and mandibular digital casts of the user's denture, with the adhered visual markers.
Figure 8 illustrates the step of correlating the visual markers in the first maxillary and mandibular digital casts and the registered occlusal contacts, according to particular embodiments of the method and system of the invention.
Figure 9 presents an example of the second maxillary and mandibular digital casts of the user's denture, with the projected occlusal contacts.

### DETAILED DESCRIPTION OF THE INVENTION

The matters defined in this detailed description are provided to assist in a comprehensive understanding of the invention. Accordingly, those of ordinary skill in the art will recognize that variation changes and modifications of the embodiments described herein can be made without departing from the scope of the invention. In particular, note that any particular embodiment or feature of the device of the invention may be applied to the method of the invention and vice versa. Also, description of well-known functions and elements are omitted for clarity and conciseness.

Note that in this text, the term "comprises" and its derivations (such as "comprising", etc.) should not be understood in an excluding sense, that is, these terms should not be interpreted as excluding the possibility that what is described and defined may include further elements, steps, etc.

In the context of the present invention, the term "approximately" and terms of its family (such as "approximate", etc.) should be understood as indicating values very near to those which accompany the aforementioned term. That is to say, a deviation within reasonable limits from an exact value should be accepted, because a skilled person in the art will understand that such a deviation from the values indicated is inevitable due to measurement inaccuracies, etc. The same applies to the terms "about" and "around" and "substantially".

Also, note that the system and method of the invention do not provide any diagnosis, planning and treatment of the human body, nor requires to be operated by medical staff. Instead, the invention merely provides the tools for measuring and virtually deploying dental occlusion information. Any use that may be given to the measured information for diagnostics purposes falls outside the scope of the current invention.

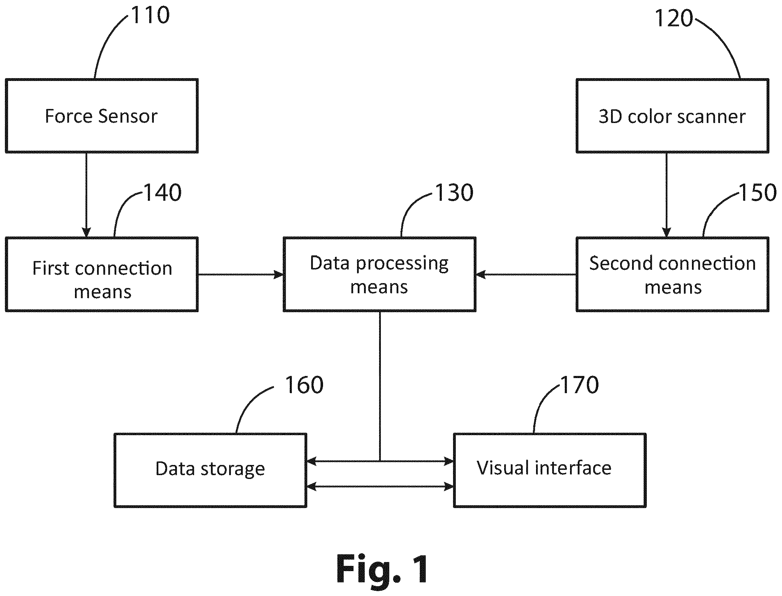

Figure 1 presents a schematic representation of the main elements of the system of the invention, according to a preferred embodiment thereof. The system comprises two sources of information for characterizing the user's occlusion dynamics, namely a force sensor (110) and a three-dimensional scanner (120). The force sensor (110) preferably comprises a tinted paper, although particular embodiments of the invention may comprise any other kind of marking means for occlusal contacts known in the state of the art. The three-dimensional scanner (120) is preferably an intra-oral 3D scanner (120), although an extra-oral 3D scanner (120) can alternatively be used, for example by performing any arcade scan from plaster molds of the user's denture.

The inputs of both sources are processed and correlated at data processing means (130), connected to the force sensor (110) and the 3D scanner (120) through first connection means (140) and second connection means (150), respectively. The data processing means (130) may be implemented in a computer, a digital signal processor, a field-programmable gate array, an application-specific integrated circuit, a micro-processor, a micro-controller, or any other form of programmable hardware. The first connection means (140) and second connection means (150) may be implemented through any wired or wireless technology known in the state of the art.

The system further comprises data storage means (160) and a visual interface (170) connected to the data processing means (130). The data storage means (160) may store any intermediate and/or final result of the computations performed by the data processing means (130). The visual interface (170) displays said intermediate and/or final results, and may additionally include any means of user input.

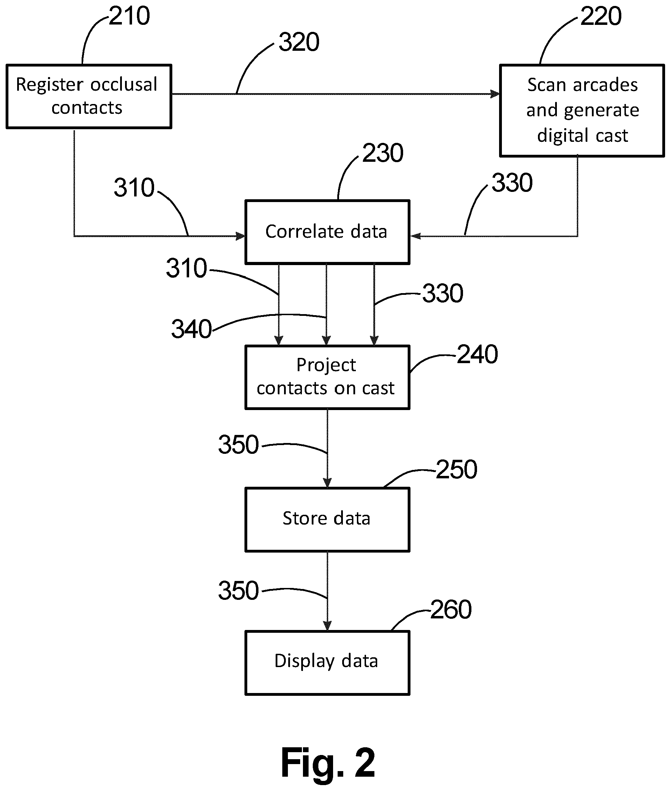

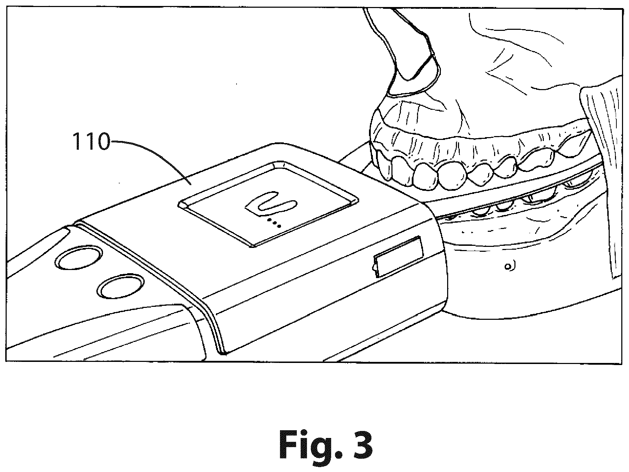

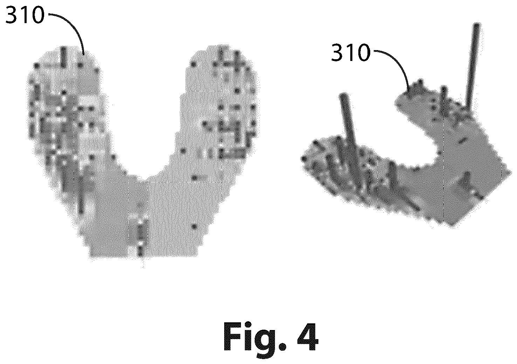

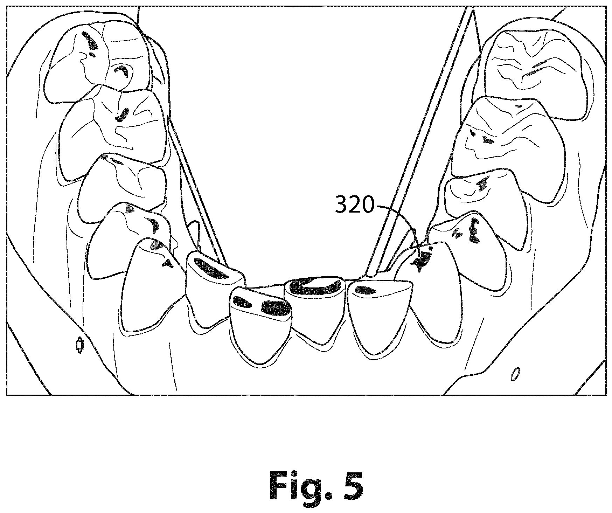

Figure 2 shows a schematic representation of the steps performed by the method, computer of the invention, according to preferred embodiments thereof. First, occlusal contacts (310) are registered (210) by the force sensor (110). Registered data is transferred to the processing means (130) through the first connection means (140). Said registered data of the occlusal contacts (310) comprises time-resolved information of the pressure induced by the user's denture, at each bi-dimensional position measured by the force sensor (110). Furthermore, the step of registering (210) the occlusal contacts (310) also results in the adhesion of visual markers (320) to the user's denture, in those positions where occlusion occurs. The step of registering (210) occlusal contacts (310) is illustrated in figure 3, whereas an example of the resulting occlusal contacts (310) information is shown in figure 4. An example of the visual markers (320) adhered to the user's denture is also presented in figure 5.

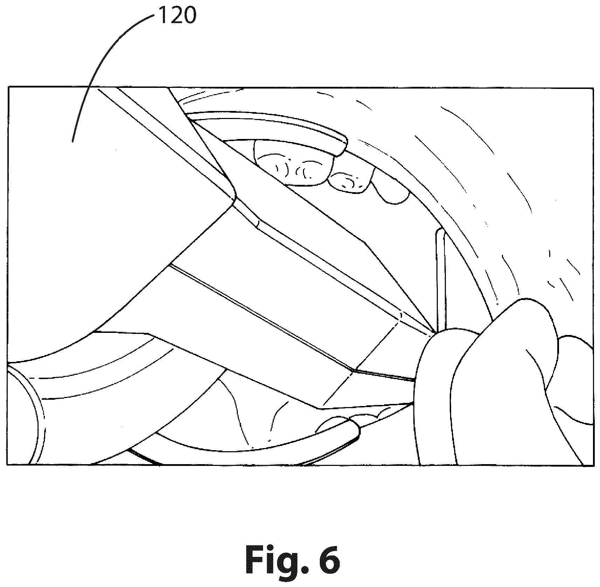

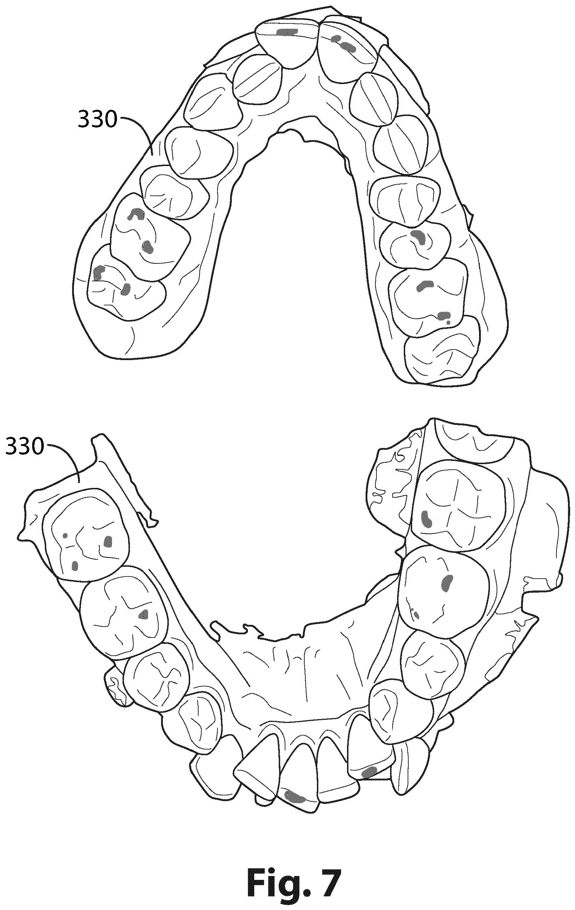

Secondly, the maxillary and mandibular arcades of the user's denture are scanned by the 3D scanner (120) and respective first maxillary and mandibular digital casts (330) are generated (220). Said first maxillary and mandibular digital casts (330) hence comprise three-dimensional information of the user's denture. Scanned data is transferred to the processing means (130) through the second connection means (150). Furthermore, the 3D scanner (120) is adapted to provide a differentiated response to the adhered visual markers (320). In case of using tinted paper or any other kind of colour marking, this may be straightforwardly implemented by including color information in the first maxillary and mandibular digital casts (330). The step of scanning (220) the first maxillary and mandibular digital casts (330) is illustrated in figure 6, whereas an example of a color-sensitive first digital cast (330) is shown in figure 7.

Then, data is correlated (230), that is, the processing means (130) compute positioning information (340) that align the visual markers (320) in the first maxillary and mandibular digital casts (330) and the registered occlusal contacts (310). Data correlation (230) may be either performed in a fully automated manner, or more preferably, combining automated algorithms with a pre-alignment stage where the user manually introduces positioning input through the visual interface (170). That is, in case of manual data correlation (230), the user indicates which positions need to be correlated, for example, by clicking through a pointer in multiple positions of both the first maxillary and mandibular digital casts (330) and the registered occlusal contacts (310), and establishing which pairs of positions should be matched. This can be used as a first approximation for ulterior automated refining. Alternatively, after scanning and visualizing the visual markers (320) in the first maxillary and mandibular digital casts (330), said visual markers (320) may be positioned and matched to the locations of the occlusal forces in maximum intercuspidation.

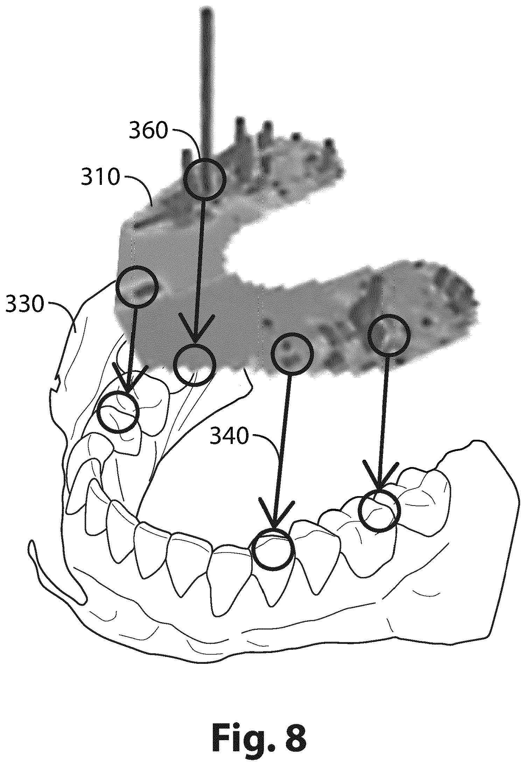

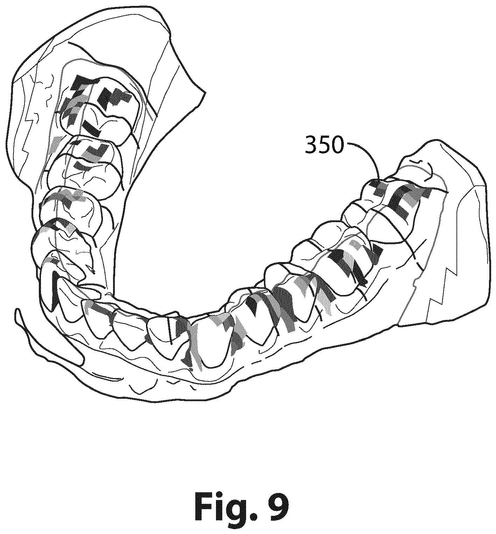

In case of fully-automated data correlation (230), the method preferably comprises associating at least three points of maximum occlusion (360) within the registered occlusal contacts (310) and at least three visual markers (320) in the first maxillary and mandibular digital casts (330), as shown in figure 8. The at least three points of maximum occlusion (360) in the registered occlusal contacts (310) are selected by straightforward peak selection algorithms, whereas the at least three visual markers (320) in the first maxillary and mandibular digital casts (330) are inherently associated to the positions of maximum intercuspidation by the operation of the tinted paper. The three points of the 3D first maxillary and mandibular digital casts (330) define a plane where the 2D occlusal contacts (310) plane is projected. In case that more than three visual markers (320) are used for data correlation (230), an optimization algorithm such as minimum mean square error (MMSE) may be applied to define the plane of the first maxillary and mandibular digital casts (330) where the occlusal contacts (310) are projected. Second maxillary and mandibular digital casts (350) are then generated by applying the positioning information (340) to project (240) the occlusal contacts (310) onto the first maxillary and mandibular digital casts, as shown in figure 9. Said occlusal contacts (310) comprise time-resolved force information, which is preferably displayed through time-varying color-coded projection. Note that color and texture characteristics of the first maxillary and mandibular digital casts (330) may be removed before projecting (240) the occlusal contacts (310).

Finally, these second maxillary and mandibular digital casts (350) are then stored (250) at the data storage means (160) and displayed (260) for posterior analysis through the visual interface (170).

## Claims

1. System of dental occlusion measurement and virtual deployment comprising:
- a force sensor (110) adapted to register (210) a plurality of occlusal contacts (310) and to adhere a plurality of visual markers (320) to a user's denture in the positions of said occlusal contacts (310); **characterized in that** the system further comprises:
- a three-dimensional scanner (120) configured to scan (220) a maxillary arcade and a mandibular arcade of the user's denture and to generate, from the scanning data, respective first maxillary and mandibular digital casts (330) of the user's denture with the adhered visual markers (320); and
- data processing means (130) configured to compute a positioning information (340) by correlating (230) the visual markers (320) in the first maxillary and mandibular digital casts (330) and the registered occlusal contacts (310); and to generate a second maxillary and mandibular digital casts (350) of the user's denture by projecting (240) the occlusal contacts (310) onto the first maxillary and mandibular digital casts (330) according to the computed positioning information (340).

2. System according to claim 1 **characterized in that** the three-dimensional scanner (120) is an intra-oral three-dimensional scanner (120).

3. System according to claim 1 **characterized in that** the three-dimensional scanner (120) is an extra-oral three-dimensional scanner (120).

4. System according to any of the previous claims **characterized in that** the force sensor (110) further comprises a tinted paper adapted to adhere the visual markers (320) to the user's denture.

5. System according to any of the previous claims **characterized in that** the data processing means (130) are further configured to compute the positioning information (340) by correlating (230) the visual markers (320) in the first maxillary and mandibular digital casts (330) and the registered occlusal contacts (310) through an automated algorithm.

6. System according to claim 5 **characterized in that** the automated the data processing means (130) are further configured to perform a manual pre-alignment by associating at least three points of maximum occlusion (360) within the registered occlusal contacts (310) and at least three visual markers (320) in the first maxillary and mandibular digital casts (330), using positioning input from a user received through a visual interface (170).

7. Method of dental occlusion measurement and virtual deployment comprising:
- registering (210) a plurality of occlusal contacts (310) by means of a force sensor (110), being the force sensor (110) further adapted to adhere a plurality of visual markers (320) to a user's denture in the positions of said occlusal contacts (310);
**characterized in that** the method further comprises:
- scanning (220) a maxillary arcade and a mandibular arcade of the user's denture and generating, from the scanning data, respective first maxillary and mandibular digital casts (330) of the user's denture with the adhered visual markers (320);
- computing a positioning information (340) by correlating (230) the visual markers (320) in the first maxillary and mandibular digital casts (330) and the registered occlusal contacts (310); and
- generating a second maxillary and mandibular digital casts (350) of the user's denture by projecting (240) the occlusal contacts (310) onto the first maxillary and mandibular digital casts (330) according to the computed positioning information (340).

8. Method according to claim 7 **characterized in that** the step of scanning (220) the maxillary arcade and the mandibular arcade and generating the first maxillary and mandibular digital casts (330) of the user's denture with the adhered visual markers (320) is performed with an intra-oral three-dimensional scanner (120).

9. Method according to claim 7 **characterized in that** the step of scanning (220) the maxillary arcade and the mandibular arcade and generating the first maxillary and mandibular digital casts (330) of the user's denture with the adhered visual markers (320) is performed with an extra-oral three-dimensional scanner (120).

10. Method according to claims 7 to 9 **characterized in that** the step of scanning (220) the maxillary arcade and the mandibular arcade and generating the first maxillary and mandibular digital casts (330) of the user's denture further comprises detecting a plurality of visual markers (320) generated by a tinted paper of the force sensor (110).

11. Method according to claims 7 to 10 **characterized in that** the step of computing the positioning information (340) by correlating (230) the visual markers (320) in the first maxillary and mandibular digital casts (330) and the registered occlusal contacts (310) is performed through an automated algorithm.

12. Method according to claim 11 **characterized in that** the step of computing the positioning information (340) further comprises performing a manual pre-alignment by associating at least three points of maximum occlusion (360) within the registered occlusal contacts (310) and at least three visual markers (320) in the first maxillary and mandibular digital casts (330), using positioning input from a user received through a visual interface (170).

13. Method according to any of claims 7 to 12 **characterized in that** the step of computing the positioning information (340) by correlating (230) the visual markers (320) in the first maxillary and mandibular digital casts (330) and the registered occlusal contacts (310) further comprises receiving positioning input from a user.

14. Computer program comprising computer program code means adapted to perform the steps of the method according to any of claims 7 to 13 on a system according to any one of claims 1 to 6 when said program is run on a computer, a digital signal processor, a field-programmable gate array, an application-specific integrated circuit, a micro-processor, a micro-controller, or any other form of programmable hardware.

## Patentansprüche

1. System zur Messung der dentalen Okklusion und zum virtuellen Einsatz, umfassend:
einen Kraftsensor (110), der geeignet ist, eine Mehrzahl von okklusalen Kontakten (310) aufzuzeichnen (210) und eine Mehrzahl von visuellen Markierungen (320) an dem Gebiss einer Benutzerperson in den Positionen der okklusalen Kontakte (310) anzuheften;
**dadurch gekennzeichnet, dass** das System weiterhin umfasst:
einen dreidimensionalen Scanner (120), der ausgebildet ist, einen Oberkieferbogen und einen Unterkieferbogen des Gebisses der Benutzerperson abzutasten (220) und aus den Abtastdaten entsprechende erste Oberkiefer- und Unterkiefer-Digitalabdrücke (330) des Gebisses der Benutzerperson mit den angehefteten visuellen Markierungen (320) zu erzeugen; und
Datenverarbeitungsmittel (130), die ausgebildet sind, eine Positionierungsinformation (340) durch Korrelieren (230) der visuellen Markierungen (320) in den ersten Oberkiefer- und Unterkiefer-Digitalabdrücken (330) und der aufgezeichneten okklusalen Kontakte (310) zu berechnen; und zweite Oberkiefer- und Unterkiefer-Digitalabdrücke (350) des Gebisses der Benutzerperson durch Projizieren (240) der okklusalen Kontakte (310) auf die ersten Oberkiefer- und Unterkiefer-Digitalabdrücke (330) gemäß der berechneten Positionierungsinformation (340) zu erzeugen.

2. System nach Anspruch 1, **dadurch gekennzeichnet, dass** der dreidimensionale Scanner (120) ein intraoraler dreidimensionaler Scanner (120) ist.

3. System nach Anspruch 1, **dadurch gekennzeichnet, dass** der dreidimensionale Scanner (120) ein extra-oraler dreidimensionaler Scanner (120) ist.

4. System nach einem der vorhergehenden Ansprüche, **dadurch gekennzeichnet, dass** der Kraftsensor (110) ferner ein getöntes Papier umfasst, das geeignet ist, die visuellen Markierungen (320) an dem Gebiss der Benutzerperson anzuheften.

5. System nach einem der vorhergehenden Ansprüche, **dadurch gekennzeichnet, dass** die Datenverarbeitungsmittel (130) außerdem ausgebildet sind, die Positionierungsinformation (340) durch Korrelieren (230) der visuellen Markierungen (320) in den ersten Oberkiefer- und Unterkiefer-Digitalabdrücken (330) und der aufgezeichneten okklusalen Kontakte (310) durch einen automatischen Algorithmus zu berechnen.

6. System nach Anspruch 5, **dadurch gekennzeichnet, dass** die automatisierten Datenverarbeitungsmittel (130) außerdem ausgebildet sind, eine manuelle Vorausrichtung durchzuführen, indem mindestens drei Punkte maximaler Okklusion (360) innerhalb der aufgezeichneten okklusalen Kontakte (310) und mindestens drei visuelle Markierungen (320) in den ersten digitalen Oberkiefer- und Unterkieferabdrücken (330) unter Verwendung einer Positionierungseingabe von einer Benutzerperson, die über eine visuelle Schnittstelle (170) empfangen wird, zugeordnet werden.

7. Verfahren zur Messung der dentalen Okklusion und zum virtuellen Einsatz, umfassend:
Aufzeichnen (210) einer Mehrzahl von okklusalen Kontakten (310) mittels eines Kraftsensors (110), der ein Kraftsensor (110) ist, der außerdem geeignet ist, eine Mehrzahl von visuellen Markierungen (320) an dem Gebiss einer Benutzerperson in den Positionen der okklusalen Kontakte (310) anzuheften;
**dadurch gekennzeichnet, dass** das Verfahren weiterhin umfasst:
Abtasten (220) eines Oberkieferbogens und eines Unterkieferbogens des Gebisses der Benutzerperson und Erzeugen entsprechender erster Oberkiefer- und Unterkiefer-Digitalabdrücke (330) des Gebisses der Benutzerperson mit den angehefteten visuellen Markierungen (320) aus den Abtastdaten;
Berechnen einer Positionierungsinformation (340) durch Korrelieren (230) der visuellen Markierungen (320) in den ersten Oberkiefer- und Unterkiefer-Digitalabdrücken (330) und der aufgezeichneten okklusalen Kontakte (310); und
Erzeugen von zweiten Oberkiefer- und Unterkiefer-Digitalabdrücken (350) des Gebisses der Benutzerperson durch Projizieren (240) der okklusalen Kontakte (310) auf die ersten Oberkiefer- und Unterkiefer-Digitalabdrücke (330) gemäß der berechneten Positionierungsinformation (340).

8. Verfahren nach Anspruch 7, **dadurch gekennzeichnet, dass** der Schritt des Abtastens (220) des Oberkieferbogens und des Unterkieferbogens und des Erzeugens der ersten Oberkiefer- und Unterkiefer-Digitalabdrücke (330) des Gebisses der Benutzerperson mit den angehefteten visuellen Markierungen (320) mit einem intra-oralen dreidimensionalen Scanner (120) durchgeführt wird.

9. Verfahren nach Anspruch 7, **dadurch gekennzeichnet, dass** der Schritt des Abtastens (220) des Oberkieferbogens und des Unterkieferbogens und des Erzeugens der ersten Oberkiefer- und Unterkiefer-Digitalabdrücke (330) des Gebisses der Benutzerperson mit den angehefteten visuellen Markierungen (320) mit einem extra-oralen dreidimensionalen Scanner (120) durchgeführt wird.

10. Verfahren nach einem der Ansprüche 7 bis 9, **dadurch gekennzeichnet, dass** der Schritt des Abtastens (220) des Oberkieferbogens und des Unterkieferbogens und des Erzeugens der ersten Oberkiefer- und Unterkiefer-Digitalabdrücke (330) des Gebisses der Benutzerperson ferner das Erfassen einer Mehrzahl von visuellen Markierungen (320) umfasst, die durch ein getöntes Papier des Kraftsensors (110) erzeugt werden.

11. Verfahren nach einem der Ansprüche 7 bis 10, **dadurch gekennzeichnet, dass** der Schritt des Berechnens der Positionierungsinformation (340) durch Korrelieren (230) der visuellen Markierungen (320) in den ersten digitalen Ober- und Unterkieferabdrücken (330) und der aufgezeichneten okklusalen Kontakte (310) von einem automatisierten Algorithmus durchgeführt wird.

12. Verfahren nach Anspruch 11, **dadurch gekennzeichnet, dass** der Schritt des Berechnens der Positionierungsinformation (340) ferner das Durchführen einer manuellen Vorausrichtung durch Zuordnen von mindestens drei Punkten maximaler Okklusion (360) innerhalb der aufgezeichneten okklusalen Kontakte (310) und mindestens drei visuellen Markierungen (320) in den ersten digitalen Oberkiefer- und Unterkieferabdrücken (330) unter Verwendung einer Positionierungseingabe von einer Benutzerperson, die über eine visuelle Schnittstelle (170) empfangen wird, umfasst.

13. Verfahren nach einem der Ansprüche 7 bis 12, **dadurch gekennzeichnet, dass** der Schritt des Berechnens der Positionierungsinformation (340) durch Korrelieren (230) der visuellen Markierungen (320) in den ersten digitalen Ober- und Unterkieferabdrücken (330) und der aufgezeichneten okklusalen Kontakte (310) außerdem das Empfangen einer Positionierungseingabe von einer Benutzerperson umfasst.

14. Computerprogramm, das Computerprogrammcodemittel umfasst, die geeignet sind, die Schritte des Verfahrens nach einem der Ansprüche 7 bis 13 auf einem System nach einem der Ansprüche 1 bis 6 durchzuführen, wenn das Programm auf einem Computer, einem digitalen Signalprozessor, einem feldprogrammierbaren Gate-Array, einer anwendungsspezifischen integrierten Schaltung, einem Mikroprozessor, einem Mikrocontroller oder einer anderen Form von programmierbarer Hardware ausgeführt wird.

## Revendications

1. Système de mesure d'occlusion dentaire et de déploiement virtuel comprenant :
- un capteur de force (110) adapté à enregistrer (210) une pluralité de contacts occlusaux (310) et à faire adhérer une pluralité de marqueurs visuels (320) à la denture d'un utilisateur dans les positions desdits contacts occlusaux (310) ;
**caractérisé en ce que** le système comprend en outre :
- un scanner tridimensionnel (120) configuré pour balayer (220) une arcade maxillaire et une arcade mandibulaire de la denture d'un utilisateur et pour générer, à partir des données de balayage, des premiers moulages numériques maxillaires et mandibulaires (330) respectifs de la denture d'un utilisateur avec les marqueurs visuels (320) adhérés ; et
- des moyens de traitement de données (130) configurés pour calculer une information de positionnement (340) par corrélation (230) des marqueurs visuels (320) dans les premiers moulages numériques maxillaires et mandibulaires (330) et les contacts occlusaux (310) enregistrés; et pour générer des deuxièmes moulages numériques maxillaires et mandibulaires (350) de la denture d'un utilisateur par projection (240) des contacts occlusaux (310) sur les premiers moulages numériques maxillaires et mandibulaires (330) en fonction de l'information de positionnement (340) calculée.

2. Système selon la revendication 1 **caractérisé en ce que** le scanner tridimensionnel (120) est un scanner tridimensionnel (120) intra-oral.

3. Système selon la revendication 1 **caractérisé en ce que** le scanner tridimensionnel (120) est un scanner tridimensionnel (120) extra-oral.

4. Système selon l'une quelconque des revendications précédentes **caractérisé en ce que** le capteur de force (110) comprend en outre un papier teinté adapté à faire adhérer les marqueurs visuels (320) à la denture d'un utilisateur.

5. Système selon l'une quelconque des revendications précédentes **caractérisé en ce que** les moyens de traitement de données (130) sont configurés en outre pour calculer l'information de positionnement (340) par corrélation (230) des marqueurs visuels (320) dans les premiers moulages numériques maxillaires et mandibulaires (330) et les contacts occlusaux (310) enregistrés par l'intermédiaire d'un algorithme automatisé.

6. Système selon la revendication 5 **caractérisé en ce que** les moyens de traitement de données (130) automatisés sont configurés en outre pour réaliser un pré-alignement manuel par association d'au moins trois points d'occlusion maximale (360) au sein des contacts occlusaux (310) enregistrés et d'au moins trois marqueurs visuels (320) dans les premiers moulages numériques maxillaires et mandibulaires (330), utilisant une entrée de positionnement provenant d'un utilisateur reçue par l'intermédiaire d'une interface visuelle (170).

7. Procédé de mesure d'occlusion dentaire et de déploiement virtuel comprenant :
- l'enregistrement (210) d'une pluralité de contacts occlusaux (310) au moyen d'un capteur de force (110), étant le capteur de force (110) adapté en outre à faire adhérer une pluralité de marqueurs visuels (320) à la denture d'un utilisateur dans les positions desdits contacts occlusaux (310) ;
**caractérisé en ce que** le procédé comprend en outre :
- le balayage (220) d'une arcade maxillaire et d'une arcade mandibulaire de la denture d'un utilisateur et la génération, à partir des données de balayage, de premiers moulages numériques maxillaires et mandibulaires (330) respectifs de la denture d'un utilisateur avec les marqueurs visuels (320) adhérés ;
- le calcul d'une information de positionnement (340) par corrélation (230) des marqueurs visuels (320) dans les premiers moulages numériques maxillaires et mandibulaires (330) et les contacts occlusaux (310) enregistrés ; et
- la génération de deuxièmes moulages numériques maxillaires et mandibulaires (350) de la denture d'un utilisateur par projection (240) des contacts occlusaux (310) sur les premiers moulages numériques maxillaires et mandibulaires (330) en fonction de l'information de positionnement (340) calculée.

8. Procédé selon la revendication 7 **caractérisé en ce que** l'étape de balayage (220) de l'arcade maxillaire et de l'arcade mandibulaire et de génération des premiers moulages numériques maxillaires et mandibulaires (330) de la denture d'un utilisateur avec les marqueurs visuels (320) adhérés est réalisée avec un scanner tridimensionnel (120) intra-oral.

9. Procédé selon la revendication 7 **caractérisé en ce que** l'étape de balayage (220) de l'arcade maxillaire et de l'arcade mandibulaire et de génération des premiers moulages numériques maxillaires et mandibulaires (330) de la denture d'un utilisateur avec les marqueurs visuels (320) adhérés est réalisée avec un scanner tridimensionnel (120) extra-oral.

10. Procédé selon les revendications 7 à 9 **caractérisé en ce que** l'étape de balayage (220) de l'arcade maxillaire et de l'arcade mandibulaire et de génération des premiers moulages numériques maxillaires et mandibulaires (330) de la denture d'un utilisateur comprend en outre la détection d'une pluralité de marqueurs visuels (320) générés par un papier teinté du capteur de force (110).

11. Procédé selon les revendications 7 à 10 **caractérisé en ce que** l'étape de calcul de l'information de positionnement (340) par corrélation (230) des marqueurs visuels (320) dans les premiers moulages numériques maxillaires et mandibulaires (330) et les contacts occlusaux (310) enregistrés est réalisée par l'intermédiaire d'un algorithme automatisé.

12. Procédé selon la revendication 11 **caractérisé en ce que** l'étape de calcul de l'information de positionnement (340) comprend en outre la réalisation d'un pré-alignement manuel par association d'au moins trois points d'occlusion maximale (360) au sein des contacts occlusaux (310) enregistrés et d'au moins trois marqueurs visuels (320) dans les premiers moulages numériques maxillaires et mandibulaires (330), utilisant une entrée de positionnement provenant d'un utilisateur reçue par l'intermédiaire d'une interface visuelle (170).

13. Procédé selon l'une quelconque des revendications 7 à 12 **caractérisé en ce que** l'étape de calcul de l'information de positionnement (340) par corrélation (230) des marqueurs visuels (320) dans les premiers moulages numériques maxillaires et mandibulaires (330) et les contacts occlusaux (310) enregistrés comprend en outre la réception de l'entrée de positionnement provenant d'un utilisateur.

14. Programme informatique comprenant des moyens de code de programme informatique adaptés à réaliser les étapes du procédé selon l'une quelconque des revendications 7 à 13 sur un système selon l'une quelconque des revendications 1 à 6 lorsque ledit programme est exécuté sur un ordinateur, un processeur de signaux numériques, un réseau prédiffusé programmable par l'ordinateur, un circuit intégré à application spécifique, un micro-processeur, un microcontrôleur, ou toute autre forme de matériel programmable.
